(19) Europäisches Patentamt
European Patent Office
Office européen des brevets

(11) **EP 1 030 474 B1**

(12) **FASCICULE DE BREVET EUROPEEN**

(45) Date de publication et mention
de la délivrance du brevet:
**02.08.2006 Bulletin 2006/31**

(51) Int Cl.:
*H04B 10/18* (2006.01)    *G02B 6/02* (2006.01)

(21) Numéro de dépôt: **00400209.3**

(22) Date de dépôt: **27.01.2000**

(54) **Ligne de transmission et procédé de transmission à fibre optique**

Übertragungsstrecke und Verfahren zur Übertragung mittels optischer Fasern

Transmission line and method of transmission using optical fibres

(84) Etats contractants désignés:
**AT BE CH CY DE DK ES FI FR GB GR IE IT LI LU MC NL PT SE**

(30) Priorité: **18.02.1999 FR 9902030**

(43) Date de publication de la demande:
**23.08.2000 Bulletin 2000/34**

(73) Titulaire: **Draka Comteq B.V.**
**1018 TX Amsterdam (NL)**

(72) Inventeurs:
• **Sansonetti, Pierre**
**91120 Palaiseau (FR)**
• **de Montmorillon, Louis-Anne**
**75017 Paris (FR)**

(74) Mandataire: **Blokland, Arie**
**Algemeen Octrooi- en Merkenbureau,**
**P.O. Box 645**
**5600 AP Eindhoven (NL)**

(56) Documents cités:
**EP-A- 0 789 255**          **EP-A- 0 790 510**
**EP-A- 0 862 069**          **EP-A- 0 880 243**
**WO-A-99/22257**          **FR-A- 2 768 233**

• **ABLE K M: "Evolving optical fiber designs" CCECE '97. CANADIAN CONFERENCE ON ELECTRICAL AND COMPUTER ENGINEERING. ENGINEERING INNOVATION: VOYAGE OF DISCOVERY. CONFERENCE PROCEEDINGS (CAT. NO.97TTH8244), CCECE '97. CANADIAN CONFERENCE ON ELECTRICAL AND COMPUTER ENGINEERING. ENGINEERING INNOVAT, pages 888-891 vol.2, XP002123554 1997, New York, NY, USA, IEEE, USA ISBN: 0-7803-3716-6**
• **PATENT ABSTRACTS OF JAPAN vol. 1997, no. 12, 25 décembre 1997 (1997-12-25) & JP 09 211511 A (FURUKAWA ELECTRIC CO LTD:THE), 15 août 1997 (1997-08-15)**
• **HATTORI H T ET AL: "FIBER DESIGNS WITH SIGNIFICANTLY REDUCED NONLINEARITY FOR VERY LONG DISTANCE TRANSMISSION" APPLIED OPTICS,US,OPTICAL SOCIETY OF AMERICA,WASHINGTON, vol. 37, no. 15, page 3190-3197 XP000765275 ISSN: 0003-6935**

## Description

La présente invention concerne les systèmes de transmission dans lesquels des fibres optiques dites « de ligne » guident des signaux optiques qui portent des informations à transmettre. Elle concerne plus particulièrement le cas où ces fibres sont du type unimodal aux longueurs d'onde utilisées.

Quelque soit son type, une fibre de ligne présente des pertes. Dans le cas d'une transmission à longue distance ces pertes sont compensées par des amplificateurs ou répéteurs répartis sur la longueur d'une ligne de transmission formée à l'aide d'une succession de telles fibres. Cette ligne présente alors la forme d'une succession de segments terminés chacun par un amplificateur et raccordés en série. Pour abaisser le coût du système il est souhaité d'augmenter autant que possible la longueur de ces segments. Mais chaque amplificateur a un bruit propre croissant avec son gain, ce qui, compte tenu des pertes en ligne, limite cette longueur.

La fibre de ligne présente aussi une dispersion chromatique et une pente spectrale de cette dispersion. Cette dispersion dépend de la longueur d'onde porteuse, c'est à dire de la longueur de l'onde qui porte le signal transmis. Elle peut déformer ce signal. Par ailleurs la capacité du système, c'est à dire le débit d'informations pouvant être transmis, est typiquement accrue par un multiplexage selon lequel plusieurs longueurs d'onde porteuses sont utilisées pour porter l'information. Dans ce cas la pente de la dispersion s'oppose à ce qu'une même valeur de dispersion puisse être obtenue pour chacune de ces longueurs d'onde. Or des valeurs de dispersion chromatique trop élevées peuvent entraîner une déformation excessive des signaux. C'est pourquoi il est connu de corriger périodiquement cette déformation grâce à des compensateurs de dispersion ayant une dispersion et éventuellement une pente de dispersion de signes opposés à celles de la fibre de ligne. Mais, dans le cas d'une transmission sur longue distance, ces compensateurs introduisent des pertes d'autant plus grandes que la dispersion linéique à compenser est plus forte. C'est pourquoi il est généralement souhaité de limiter la dispersion linéique des fibres de ligne.

Des systèmes de transmission anciens, les fibres de ligne posées initialement avaient été choisies pour présenter une faible dispersion à la longueur d'onde porteuse qui était alors préférée, à savoir 1300 nm. Mais il est apparu plus tard qu'une gamme de longueurs d'onde autour de 1550 nm était préférable parce qu'elle permettait d'utiliser des amplificateurs à fibres dopées à l'erbium. Les valeurs élevées de dispersion que ces fibres posées présentaient à ces nouvelles longueurs d'onde sont alors apparues incompatibles avec les débits d'information élevés souhaités. Une solution a alors été considérée qui était d'insérer un compensateur de dispersion en sortie de chacun des segments de la ligne de ce système. Elle a été mise en oeuvre parce que son coût était moindre que celui de la pose d'une nouvelle fibre qui aurait été adaptée à la nouvelle gamme de longueur d'onde.

EP 0 862 069 décrit une ligne de transmission à fibre optique incluant une succession de segments raccordés en série, chacun de ces segments s'étendant d'une entrée jusqu'à la sortie de ce segment et incluant une fibre optique de ligne pour guider une onde porteuse et un élément à fibre optique pour éliminer des effets optique non linéaires et du mixage d'ondes. Cet élément pour éliminer les effets non linéaires est associé à l'entrée du segment et la fibre optique de ligne est raccordée en série de cet élément.

La fibre optique de ligne est constituée d'une fibre optique unimodale ayant une surface effective de mode à une superficie entre 41 $\mu$m$^2$ et 53 $\mu$m$^2$ et ayant zéro-dispersion chromatique pour une onde dans la bande à communication d'ondes de 1,5 $\mu$m. Cet élément pour éliminer les effets optique non linéaires est constitué d'une fibre optique unimodale ayant une surface effective de mode à une superficie de presque 150 $\mu$m$^2$ et ayant zéro-dispersion pour une onde porteuse à une longueur d'onde de 1550 nm. Cette fibre a été dessiné pour avoir une dispersion chromatique variant faiblement le long de la direction de fibre afin d'éliminer le mixage d'ondes.

EP 0 789 255 décrit une fibre optique unimodale de ligne pour une ligne de transmission, cette fibre optique de ligne ayant zéro-dispersion chromatique pour une onde dans la fenêtre d'opération de 1550 nm incluant le domaine d'ondes de 1530 nm à 1565 nm et ayant une surface effective de mode à une superficie étant supérieure à 90 $\mu$m$^2$ pour cette fenêtre d'opération. Cette fibre optique peut-être dessiné pour avoir une surface effective de mode ayant une superficie supérieure à 350 $\mu$m$^2$ pour la fenêtre d'opération de 1550 nm.

Par ailleurs pour élever la qualité de la transmission des systèmes connus en élevant leur rapport signal sur bruit, les spécialistes ont cherché à augmenter le niveau de puissance en sortie des amplificateurs de ces systèmes. Mais ils ont été limités par le développement d'effets non linéaires dégradant la qualité de la transmission. L'importance de tels effets résulte de valeurs trop élevées du champ électrique optique qui accompagne la propagation des ondes guidées. Pour un niveau donné de la puissance des ondes guidées, la valeur de ce champ est d'autant plus faible que la fibre de la ligne utilisée offre à ces signaux une surface effective de mode plus élevée. Cette surface dépend de la longueur d'onde porteuse de ces signaux et elle est définie par la formule :

$$Seff = 2\pi \left( \int \Psi^2 (r).r.dr \right)^2 / \int \Psi^4(r).r.dr,$$

dans laquelle les deux intégrales sont définies de zéro à l'infini, r est la distance à l'axe de la fibre et $\Psi$ est l'amplitude du champ électrique optique. Elle peut être considérée comme l'aire dans laquelle la puissance des signaux optiques se répartit dans chaque section droite de cette fibre.

Pour pouvoir élever le rapport signal sur bruit, les spécialistes ont souhaité que cette surface soit aussi grande que possible. Mais ils savaient que s'ils cherchaient à augmenter cette surface au maximum, ils seraient amenés à augmenter la dispersion chromatique de la fibre. Il est en effet bien connu que cette dispersion est la somme de deux composantes dont les signes sont généralement opposés, à savoir une « dispersion de matériau » et « une dispersion de guide ». La première de ces deux composantes étant imposée par le matériau et tendant à être prépondérante, une diminution de leur somme ne peut résulter que d'une augmentation de la valeur absolue de la seconde. Or cette dernière est proportionnelle à l'écart d'indice entre le coeur et la gaine de la fibre. Lorsqu'on cherche à diminuer la dispersion de la fibre on est donc amené à augmenter cet écart d'indice, ce qui tend à diminuer la surface effective de mode.

C'est pourquoi, dans le cas où on doit installer un nouveau système de transmission à fibre optique sur longue distance, il est considéré à l'époque actuelle qu'il convient de limiter les valeurs de la dispersion chromatique de la fibre de ligne utilisée, ce qui a inévitablement pour effet de limiter la surface effective de mode de cette ligne. Cette surface est typiquement comprise entre 70 et 120 $\mu m^2$ pour des fibres dont la dispersion est de quelques ps/(nm.km).

La présente invention a notamment pour but de permettre de réaliser pour un coût limité un système de transmission sur longue distance utilisant des fibres de ligne unimodales et offrant une bonne qualité de transmission tout en permettant de transmettre un débit élevé d'informations.

La présente invention a encore pour but de permettre un procédé de transmission à ligne optique incluant une étape de réalisation d'une ligne de transmission à ligne optique tel que précédemment écrit.

Ainsi, la présente invention prévoit une ligne de transmission à fibre optique, cette ligne incluant une succession de segments raccordés en série, chacun de ces segments s'étendant d'une entrée à une sortie de ce segment et incluant une fibre optique de ligne pour guider une onde porteuse, cette fibre optique de ligne étant constituée d'une fibre optique unimodale ayant une surface effective de mode pour cette onde porteuse, cette ligne de transmission étant caractérisée par le fait que cette fibre optique de ligne pour guider cette onde porteuse de chacun de ces segments s'étendant à partir de cette entrée de ce segment sensiblement jusqu'à cette sortie de ce segment et étant constituée d'une fibre optique unimodale ayant une dispersion chromatique pour cette onde porteuse et une pente spectrale de cette dispersion et ayant une surface effective de mode étant supérieure à 150 $\mu m^2$ pour une onde porteuse ayant une longueur d'onde de 1550 nm, et chacun de ces segments incluant un compensateur de dispersion raccordé en série de cette fibre optique de ligne de ce segment à cette sortie de ce segment et compensant au moins une majeure partie de cette dispersion chromatique et/ou de cette pente spectrale de cette dispersion de cette fibre optique de ligne de ce segment.

Une autre aspect de l'invention prévoit un procédé de transmission à fibre, ce procédé incluant une étape de réalisation d'une ligne de transmission à fibre optique apte à guider des signaux optiques à partir d'une entrée jusqu'à une sortie de cette ligne de transmission, cette ligne de transmission incluant une succession de segments raccordés en série, chacun de ces segments s'étendant d'une entrée à une sortie de ce segment et incluant une fibre optique de ligne pour guider une onde porteuse, cette fibre optique de ligne étant constituée d'une fibre optique unimodale ayant une surface effective de mode pour cette onde porteuse et des pertes, et chacun de ces segments incluant un amplificateur optique disposé à cette sortie de ce segment et compensant au moins une majeure partie de ces pertes de cette fibre optique de ligne de ce segment, ledit procédé incluant en outre les étapes de:

- connexion d'un émetteur à cette entrée de cette ligne de transmission, cet émetteur étant apte à recevoir des informations et à fournir en réponse des signaux optiques portant ces informations,
- connexion d'un récepteur à cette sortie de cette ligne de transmission, ce récepteur étant apte à recevoir des signaux optiques et à fournir en réponse des informations portées par ces signaux optiques,
- recueil d'informations à transmettre,
- fourniture de ces informations à transmettre à cet émetteur pour que ce récepteur fournisse en réponse ces informations,

ce procédé étant caractérisé par le fait que cette fibre optique de ligne pour guider cette onde porteuse de chacun de ces segments s'étendant à partir de cette entrée de ce segment sensiblement jusqu'à cette sortie de ce segment et étant constituée d'une fibre optique unimodale ayant une dispersion chromatique pour cette onde porteuse et une pente spectrale de cette dispersion et ayant une surface effective de mode étant supérieure à 150 $\mu m^2$ pour une onde porteuse ayant une longueur d'onde de 1550 nm.

par une étape d'insertion un compensateur de dispersion dans chacun de ces segments de cette ligne de transmission, cet compensateur de dispersion étant associé à cet amplificateur optique de ce segment et raccordé en série de cette fibre optique de ligne de ce segment à cette sortie de ce segment et compensant au moins une majeure partie de cette dispersion chromatique et/ou cette pente de cette dispersion de cette fibre optique de ligne de ce segment, et

par le fait qu'au moins cette étape de fourniture de ces informations à transmettre à cette émetteur est réalisée seulement après cette étape d'insertion d'un compensateur de dispersion dans chacun de ces segments.

Dans le cadre de cette invention il a été trouvé que, pour la réalisation d'un système de transmission nouveau, des compensateurs de dispersion de type connu permettaient de compenser convenablement les dispersions chromatiques d'une fibre de ligne ayant une surface effective de mode bien supérieure à celles des fibres connues pour une telle réalisation. Il a aussi été trouvé que les pertes introduites par ces compensateurs étaient plus que compensées par une augmentation du niveau de puissance des signaux pouvant alors être guidés par cette fibre sans augmenter excessivement les effets non linéaires affectant ces signaux dans cette fibre en sortie des amplificateurs. Cette invention a ainsi permis d'élever le rapport signal sur bruit apparaissant en sortie de ligne, et donc les performances du système. Par ailleurs la marge qu'elle dégage quant à la dispersion chromatique de la fibre de ligne permet de limiter le coût de cette dernière.

A l'aide des figures schématiques ci-jointes on va indiquer ci-après divers aspects de cette invention et décrire à titre d'exemple comment elle peut être mise en oeuvre.

Lorsque deux éléments assurant une même fonction sont représentés sur ces figures ils y sont désignés par les mêmes numéros ou lettres de référence.

La figure 1 représente un système de transmission selon cette invention.

Les figures 2 et 3 représentent respectivement un premier et un deuxième modes de réalisation d'un bloc répéteur du système de la figure 1.

La figure 4 présente les paramètres des profils d'indice de deux fibres de ligne utilisables dans le système de la figure 1.

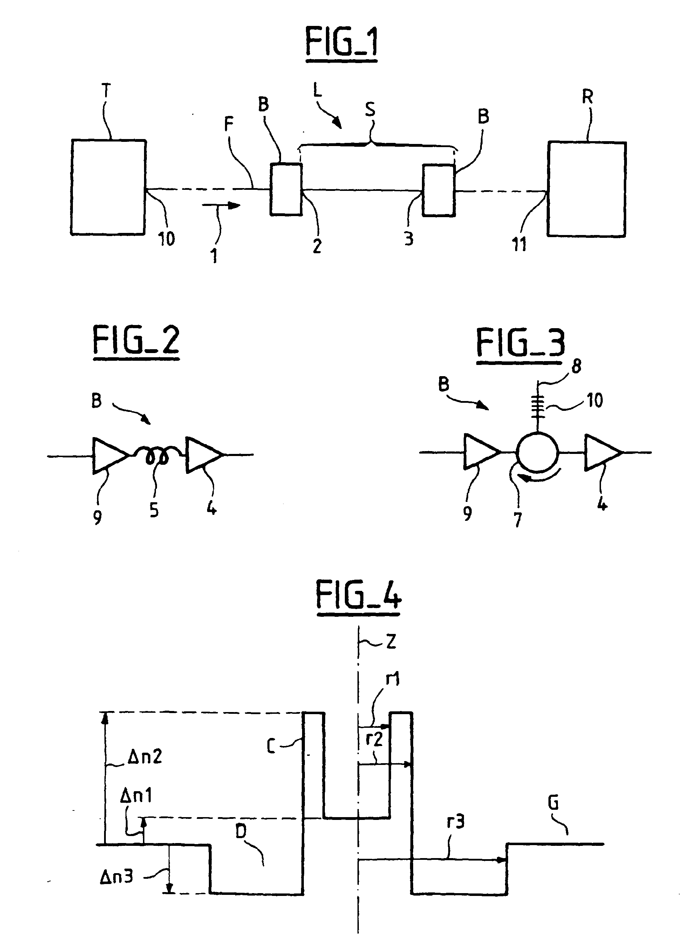

Conformément à la figure 1 le système de cette invention comporte de manière usuelle un émetteur T relié à un récepteur R par une ligne de transmission L. L'émetteur T émet des signaux optiques portant des informations à transmettre. La ligne L guide ces signaux dans la direction indiquée par une flèche 1. Le récepteur R reçoit ces signaux et restitue les informations transmises.

La ligne L est également objet de la présente invention. Elle a une entrée 10 et une sortie 11. Elle inclut une succession de segments tels que S raccordés en série. Chacun de ces segments s'étend d'une entrée 2 à une sortie 3 de ce segment et inclut une succession d'éléments raccordés en série. De manière connue ces éléments sont notamment les suivants à partir de cette entrée :

- Une fibre optique unimodale F constituée de silice et s'étendant sensiblement jusqu'à la sortie de ce segment pour guider au moins une onde porteuse. Cette fibre a une surface effective de mode pour cette onde. Elle a aussi une dispersion chromatique et une pente de cette dispersion. Elle constitue une fibre de ligne.

- Et un compensateur de dispersion disposé à la sortie de ce segment et compensant au moins une majeure partie de la dispersion chromatique de la fibre F et/ou de la pente de cette dispersion. Ce compensateur de dispersion est intégré dans un bloc répéteur B. Il est représenté en 5 sur la figure 2 et en 7 et 8 sur la figure 3.

Dans le cadre de cette invention la surface effective de mode de la fibre de ligne est supérieure à 150 $\mu m^2$ pour une onde porteuse ayant une longueur d'onde de 1550 nm. Dans le cas où la dispersion chromatique de cette fibre est supérieure à 6 ps/(nm.km) pour une onde porteuse guidée par cette fibre et ayant une longueur d'onde comprise entre 1530 et 1570 nm, le compensateur de dispersion compense de préférence au moins 90 % de cette dispersion. Dans le cas où le système utilise un multiplexage en longueur d'onde et où la pente de la dispersion de cette fibre est supérieure à 0,05 ps/($nm^2$.km) au voisinage de la longueur d'onde 1550 nm, le compensateur de dispersion compense de préférence au moins 90 % de cette pente.

La longueur des segments de la fibre de ligne peut typiquement aller jusqu'à 300 km.

Typiquement et comme représenté aux figures 2 et 3, la succession d'éléments de chaque segment de ligne inclut en outre un amplificateur optique associé au compensateur de dispersion pour compenser des pertes de la fibre de ligne de ce segment. Cet amplificateur est représenté en 4 et 9 sur les figures 2 et 3.

Comme présenté à la figure 2 le compensateur de dispersion de chaque segment peut notamment être constitué par une fibre compensatrice de dispersion 5. L'amplificateur de ce segment inclut alors de préférence un étage de sortie 4 disposé après ce compensateur pour éviter de faire apparaître des effets non linéaires dans cette fibre compensatrice. De plus cet amplificateur inclut avec avantage un premier étage 9 disposé entre la fibre de ligne et ce compensateur.

Comme représenté à la figure 3 le compensateur de dispersion peut être constitué par un circulateur optique 7 et un réseau de Bragg 10 dont le pas varie progressivement Ce réseau est photo-inscrit dans une fibre optique 8.

Le compensateur de dispersion et l'amplificateur sont typiquement intégrés dans un bloc répéteur B.

Sur la figure 4 présentant les paramètres de profils d'indice, des rayons sont portés horizontalement à partir de l'axe Z d'une fibre de ligne utilisable dans le cadre de cette invention. Des excès d'indice sont portés verticalement. Ce sont des excès de l'indice de réfraction de matériaux internes de cette fibre par rapport à celui d'un matériau constituant la gaine optique G de cette fibre. Une telle fibre comporte un coeur composite C constitué par une partie centrale ayant un rayon $r_1$ et un excès d'indice $\Delta n_1$ et par une partie périphérique ayant un rayon $r_2$ et un excès d'indice $\Delta n_2$ plus grand que celui de la partie centrale. Ce coeur est entouré par une couronne de confinement D ayant un rayon $r_3$, et un excès d'indice négatif $\Delta n_3$.

Dans le cas d'une telle fibre optique de ligne r1 = 3,78 $\mu$m, r2 = 6,31 $\mu$m, r3 = 16,80 $\mu$m, $\Delta n1$ = 1,4 . 10-3, $\Delta n2$ = 7 . 10-3, $\Delta n3$ = - 2,8 .10-3.

La surface effective de mode est alors Seff = 150,8 $\mu m^2$, la dispersion chromatique est DC = 17 ps/(nm.km), la pente de cette dispersion est PDC = 0,064 ps/($nm^2$.km),la différence d'indice effectif est $\Delta n.eff$ = 2,42 . 10-3, et le rayon de mode selon la deuxième définition de Petermann est WO2 = 4,98 $\mu$m, ces valeurs pour une longueur d'onde de 1550 nm.

Cette invention a encore pour objet un procédé de transmission selon lequel on réalise, puis utilise un système tel que précédemment décrit. Ce procédé comporte des étapes connues semblables à celles du procédé connu selon lequel on a réalisé, utilisé, modifié et réutilisé les systèmes anciens précédemment mentionnés.

Ces étapes connues incluent la réalisation d'une ligne de transmission telle que la ligne L incluant les segments tels que S. La succession d'éléments de chacun de ces segments inclut à partir de l'entrée de ce segment:

- une fibre de ligne telle que la fibre F, et
- un amplificateur tel que l'amplificateur 4.

Ce procédé inclut en outre les étapes connues de:

- connexion d'un émetteur T à l'entrée 10 de la ligne de transmission, cet émetteur étant apte à recevoir des informations et à fournir en réponse des signaux optiques portant ces informations,
- connexion d'un récepteur R à la sortie 11 de cette même ligne, ce récepteur étant apte à recevoir des signaux optiques et à fournir en réponse des informations portées par ces signaux,
- recueil d'informations à transmettre,
- fourniture de ces informations à transmettre à l'émetteur T pour que le récepteur R fournisse en réponse ces informations, et
- insertion d'un compensateur de dispersion tel que 5, ou 7, 8, dans chacun des segments de la ligne de transmission, ce compensateur étant associé à l'amplificateur de sortie 4 de ce segment et compensant au moins une majeure partie de la dispersion chromatique de cette fibre et/ou de la pente de cette dispersion.

Dans le procédé connu précédemment mentionné l'étape d'insertion d'un compensateur de dispersion a été postérieure à des étapes respectivement conformes aux autres étapes citées ci-dessus. Au contraire, dans le cadre de cette invention, au moins l'étape de fourniture des informations à transmettre à l'émetteur est réalisée seulement après l'étape d'insertion du compensateur de dispersion tel que 5 dans chacun des segments tels que S.

**Revendications**

1. Ligne de transmission à fibre optique, ladite ligne (L) incluant une succession de segments (S) raccordés en série, chacun de ces segments (S) s'étendant d'une entrée (2) à une sortie (3) du dit segment (S) et incluant une fibre optique de ligne (F) pour guider une onde porteuse, ladite fibre optique de ligne (F) étant constituée d'une fibre optique unimodale ayant une surface effective de mode pour ladite onde porteuse, ladite ligne de transmission (L) étant **caractérisée par le fait que** ladite fibre optique de ligne (F) pour guider ladite onde porteuse de chacun lesdits segments (S) s'étendant à partir de ladite entrée (2) du dit segment (S) sensiblement jusqu'à ladite sortie (3) du dit segment (S) et étant constituée d'une fibre optique unimodale ayant une dispersion chromatique pour ladite onde porteuse et une pente spectrale de ladite dispersion et ayant une surface effective de mode étant supérieure à 150$\mu m^2$ pour une onde porteuse ayant une longueur d'onde de 1550 nm, et chacun lesdits segments (S) incluant un compensateur de dispersion (5; 7, 8, 10) raccordé en série de ladite fibre optique de ligne (F) du dit segment (S). à ladite sortie (3) du dit segment (S) et compensant au moins une majeure partie de ladite dispersion chromatique et/ou de ladite pente spectrale de ladite dispersion de ladite fibre optique de ligne (F) du dit segment (S).

2. Ligne selon la revendication 1, ladite fibre optique de ligne (F) ayant une dispersion chromatique étant supérieure à 6 ps/(nm.km) pour une dite onde porteuse ayant une longueur d'onde comprise entre 1530 et 1600 nm, ledit compensateur de dispersion (5; 7, 8, 10) compensant au moins 90% de ladite dispersion chromatique de ladite fibre optique de ligne du dit segment.

3. Ligne selon l'une quelconque des revendications 1 à 2, ladite fibre optique de ligne (F) ayant une pente spectrale de la dispersion chromatique étant supérieure à 0,05 ps/($nm^2$.km) au voisinage d'une longueur d'onde de 1550 nm, ledit compensateur de dispersion (5; 7, 8, 10) compensant au moins 90% de ladite pente spectrale de ladite dispersion chromatique de ladite fibre optique de ligne du dit segment.

4. Ligne selon l'une quelconque des revendications 1 à 3, ladite fibre optique de ligne (F) de chacun lesdits segments (S) ayant une longueur inférieure à 300 km.

**5.** Ligne selon l'une quelconque des revendications 1 à 4, chacun desdits segments (S) incluant en outre un amplificateur optique (4, 9) associé audit compensateur de dispersion (5; 7, 8, 10) du dit segment (S).

**6.** Ligne selon l'une quelconque des revendications 1 à 5, ladite fibre optique de ligne (F) de chacun lesdits segments (S) incluant un coeur et une gaine, ledit coeur comportant une partie centrale ayant une indice de réfraction étant supérieure à celui de ladite gaine, une partie périphérique ayant une indice de réfraction étant supérieure à celui de ladite partie centrale et une couronne de confinement ayant une indice de réfraction étant inférieure à celui de ladite gaine.

**7.** Procédé de transmission à fibre optique, ledit procédé incluant une étape de réalisation d'une ligne de transmission à fibre optique (L) apte à guider des signaux optiques à partir d'une entrée (10) jusqu'à une sortie (11) de ladite ligne de transmission (L), ladite ligne de transmission (L) incluant une succession de segments (S) raccordés en série, chacun lesdits segments (S) s'étendant d'une entrée (2) à une sortie (3) du dit segment (S) et incluant une fibre optique de ligne (F) pour guider une onde porteuse, ladite fibre optique de ligne (F) étant constituée d'une fibre optique unimodale ayant une surface effective de mode pour ladite onde porteuse et des pertes, et chacun lesdits segments (S) incluant un amplificateur optique (4) disposé à ladite sortie (3) du dit segment (S) et compensant au moins une majeure partie lesdites pertes de ladite fibre optique de ligne (F) du dit segment (S), ledit procédé incluant en outre les étapes de:

- connexion d'un émetteur (T) à ladite entrée (10) de ladite ligne de transmission, ledit émetteur (T) étant apte à recevoir des informations et à fournir en réponse des signaux optiques portant lesdits informations,
- connexion d'un récepteur (R) à ladite sortie (11) de ladite ligne de transmission (L), ledit récepteur (R) étant apte à recevoir des signaux optiques et à fournir en réponse des informations portées par lesdits signaux optiques,
- recueil d'informations à transmettre,
- fourniture lesdites informations à transmettre audit émetteur pour que ledit récepteur fournisse en réponse lesdits informations,

ledit procédé étant **caractérisé par le fait que** la fibre optique de ligne (F) pour guider ladite onde porteuse de chacun lesdits segments (S) s'étendant à partir de ladite entrée (2) du dit segment (S) sensiblement jusqu'à ladite sortie (3) du dit segment (S) et étant constituée d'une fibre optique unimodale ayant une dispersion chromatique pour ladite onde porteuse et une pente spectrale de ladite dispersion et ayant une surface effective de mode étant supérieure à 150$\mu$m$^2$ pour une onde porteuse ayant une longueur d'onde de 1550 nm,

par une étape d'insertion un compensateur de dispersion (5; 7,8,10) dans chacun lesdits segments (S) de ladite ligne de transmission (L), ledit compensateur de dispersion (5; 7, 8. 10) étant associé audit amplificateur optique (4) du dit segment (S) et raccordé en série de ladite fibre optique de ligne (F) du dit segment (S) à ladite sortie (3) du dit segment (S) et compensant au moins une majeure partie de ladite dispersion chromatique et/ou de ladite pente spectrale de ladite dispersion de ladite fibre optique de ligne (F) du dit segment (S), et

**par le fait qu'**au moins ladite étape de fourniture lesdites informations à transmettre audit émetteur (T) est réalisée seulement après ladite étape d'insertion d'un compensateur de dispersion (5; 7, 8, 10) dans chacun lesdits segments (S).

**8.** Procédé de transmission à fibre optique selon la revendication 7, ladite fibre optique de ligne (F) ayant une dispersion chromatique étant supérieure à 6 ps/(nm.km) pour une dite onde porteuse ayant une longueur d'onde comprise entre 1530 et 1600 nm, ledit compensateur de dispersion (5; 7, 8, 10) compensant au moins 90% de ladite dispersion chromatique.

**9.** Procédé de transmission à fibre optique selon l'une des revendications 7 à 8, ladite fibre optique de ligne (F) ayant une pente spectrale de la dispersion chromatique étant supérieure à 0,05 ps/(nm$^2$.km) au voisinage d'une longueur d'onde de 1550 nm, ledit compensateur de dispersion (5; 7, 8, 10) compensant au moins 90% de ladite pente spectrale de dispersion chromatique.

**10.** Procédé de transmission à fibre optique selon l'une des revendications 7 à 9, ladite fibre de ligne optique (F) de chacun lesdits segments (S) ayant une longueur inférieur à 300 km.

**11.** Procédé de transmission à fibre optique selon l'une des revendications 7 à 10, ladite fibre optique de ligne (F) de chacun lesdits segments (S) incluant un coeur et une gaine, ledit coeur comportant une partie centrale ayant une indice de réfraction étant supérieure à celui de ladite gaine, une partie périphérique ayant une indice de réfraction étant supérieure à celui de ladite partie centrale et une couronne de confinement ayant une indice de réfraction étant inférieure à celui de ladite gaine.

**Claims**

1. Optical fibre transmission line, said line (L) including a succession of segments (S) connected in series, each of those segments (S) extending from an input (2) to an output (3) of said segment (S) and including a line optical fibre (F) for guiding a carrier wave, said line optical fibre (F) comprising a single-mode optical fibre having an effective mode area for said carrier wave, said transmission line (L) being **characterised in that** said line optical fibre (F) for guiding said carrier wave of each of said segments (S) extends from said input (2) of said segment (S) substantially up to said output (3) of said segment (S) and comprises a single-mode optical fibre having a chromatic dispersion for said carrier wave and a spectral slope of said dispersion and having an effective mode area greater than 150 $\mu m^2$ for a carrier wave having a wavelength of 1550 nm, and each of said segments (S) includes a dispersion compensator (5; 7, 8, 10) connected in series with said line optical fibre (F) of said segment (S) at said output (3) of said segment (S) and compensating at least a major part of said chromatic dispersion and/or of said spectral slope of said dispersion of said line optical fibre (F) of said segment (S).

2. Line according to claim 1, said line optical fibre (F) having a chromatic dispersion greater than 6 ps/(nm x km) for a said carrier wave having a wavelength between 1530 and 1600 nm inclusive, said dispersion compensator (5; 7, 8, 10) compensating at least 90 % of said chromatic dispersion of said line optical fibre of said segment.

3. Line according to any one of claims 1 to 2, said line optical fibre (F) having a spectral slope of the chromatic dispersion greater than 0.05 ps/(nm² x km) in the vicinity of a wavelength of 1550 nm, said dispersion compensator (5; 7, 8, 10) compensating at least 90 % of said spectral slope of said chromatic dispersion of said line optical fibre of said segment.

4. Line according to any one of claims 1 to 3, said line optical fibre (F) of each of said segments (S) having a length less than 300 km.

5. Line according to any one of claims 1 to 4, each of said segments (S) including, in addition, an optical amplifier (4, 9) associated with said dispersion compensator (5; 7, 8, 10) of said segment (S).

6. Line according to any one of claims 1 to 5, said line optical fibre (F) of each of said segments (S) including a core and a cladding, said core comprising a central portion having a refractive index greater than that of said cladding, a peripheral portion having a refractive index greater than that of said central portion and a confinement ring having a refractive index less than that of said cladding.

7. Method of optical fibre transmission, said method including a step of producing an optical fibre transmission line (L) capable of guiding optical signals from an input (10) to an output (11) of said transmission line (L), said transmission line (L) including a succession of segments (S) connected in series, each of said segments (S) extending from an input (2) to an output (3) of said segment (S) and including a line optical fibre (F) for guiding a carrier wave, said line optical fibre (F) comprising a single-mode optical fibre having an effective mode area for said carrier wave and losses, and each of said segments (S) including an optical amplifier (4) arranged at said output (3) of said segment (S) and compensating at least a major part of said losses of said line optical fibre (F) of said segment (S), said method including, in addition, the steps of:

- connection of a transmitter (T) at said input (10) of said transmission line, said transmitter (T) being capable of receiving information and, in response, of providing optical signals carrying said information,
- connection of a receiver (R) at said output (11) of said transmission line (L), said receiver (R) being capable of receiving optical signals and, in response, of providing information carried by said optical signals,
- collection of information to be transmitted,
- provision of said information to be transmitted to said transmitter in order for said receiver, in response, to provide said information,

said method being **characterised in that** the line optical fibre (F) for guiding said carrier wave of each of said segments (S) extends from said input (2) of said segment (S) substantially up to said output (3) of said segment (S) and comprises a single-mode optical fibre having a chromatic dispersion for said carrier wave and a spectral slope of said dispersion and having an effective mode area greater than 150 $\mu m^2$ for a carrier wave having a wavelength of 1550 nm,

by a step of insertion of a dispersion compensator (5; 7, 8, 10) into each of said segments (S) of said transmission line (L), said dispersion compensator (5; 7, 8, 10) being associated with said optical amplifier (4) of said segment (S) and connected in series with said line optical fibre (F) of said segment (S) at said output (3) of said segment (S) and compensating at least a major part of said chromatic dispersion and/or of said spectral slope of said dispersion of said line optical fibre (F) of said segment (S), and

**in that** at least said step of provision of said information to be transmitted to said transmitter (T) is carried out only after said step of insertion of a dispersion compensator (5; 7, 8, 10) into each of said segments (S).

8. Method of optical fibre transmission according to claim 7, said line optical fibre (F) having a chromatic dispersion greater than 6 ps/(nm x km) for a said carrier wave having a wavelength between 1530 and 1600 nm inclusive, said dispersion compensator (5; 7, 8, 10) compensating at least 90 % of said chromatic dispersion.

9. Method of optical fibre transmission according to any one of claims 7 to 8, said line optical fibre (F) having a spectral slope of the chromatic dispersion greater than 0.05 ps/(nm$^2$ x km) in the vicinity of a wavelength of 1550 nm, said dispersion compensator (5; 7, 8, 10) compensating at least 90 % of said spectral slope of chromatic dispersion.

10. Method of optical fibre transmission according to any one of claims 7 to 9, said line optical fibre (F) of each of said segments (S) having a length less than 300 km.

11. Method of optical fibre transmission according to any one of claims 7 to 10, said line optical fibre (F) of each of said segments (S) including a core and a cladding, said core comprising a central portion having a refractive index greater than that of said cladding, a peripheral portion having a refractive index greater than that of said central portion and a confinement ring having a refractive index less than that of said cladding.

**Patentansprüche**

1. Lichtleitfaser-Übertragungsleitung, wobei die Leitung (L) eine Folge von in Reihe miteinander verbundenen Segmenten (S), wovon sich jedes von einem Eingang (2) zu einem Ausgang (3) des Segments (S) erstreckt, und eine Leitungs-Lichtleitfaser (F), um eine Trägerwelle zu führen, enthält, wobei die Leitungs-Lichtleitfaser (F) aus einer Einzelmoden-Lichtleitfaser gebildet ist, die eine effektive Modenoberfläche für diese Trägerwelle besitzt, wobei die Übertragungsleitung (L) **dadurch gekennzeichnet ist, dass** die Leitungs-Lichtleitfaser (F) die Trägerwelle jedes der Segmente (S), das sich von dem Eingang (2) des Segments (S) im Wesentlichen bis zum Ausgang (3) des Segments (S) erstreckt und aus einer Einzelmoden-Lichtleitfaser gebildet ist, die eine chromatische Dispersion für die Trägerwelle und ein spektrales Gefälle der Dispersion besitzt und eine effektive Modenoberfläche besitzt, die für eine Trägerwelle mit einer Wellenlänge von 1550 nm größer als 150 $\mu$m$^2$ ist, führt, wobei jedes der Segmente (S) einen Dispersionskompensierer (5; 7, 8, 10) enthält, der zwischen der Leitungs-Lichtleitfaser (F) des Segments (S) und dem Ausgang (3) des Segments (S) in Reihe geschaltet ist und wenigstens einen Hauptteil der chromatischen Dispersion und/oder des spektralen Gefälles der Dispersion der Leitungs-Lichtleitfaser (F) des Segments (S) kompensiert.

2. Leitung nach Anspruch 1, wobei die Leitungs-Lichtleitfaser (F) für eine Trägerwelle mit einer Wellenlänge im Bereich von 1530 bis 1600 nm eine chromatische Dispersion von mehr als 6 ps/(nm · km) besitzt, wobei der Dispersionskompensierer (5; 7, 8, 10) wenigstens 90 % der chromatischen Dispersion der Leitungs-Lichtleitfaser des Segments kompensiert.

3. Leitung nach einem der Ansprüche 1 bis 2, wobei die Leitungs-Lichtleitfaser (F) ein spektrales Gefälle der chromatischen Dispersion besitzt, das in der Umgebung einer Wellenlänge von 1550 nm größer als 0,05 ps/(nm$^2$ · km) ist, wobei der Dispersionskompensierer (5; 7, 8, 10) wenigstens 90 % des spektralen Gefälles der chromatischen Dispersion der Leitungs-Lichtleitfaser dieses Segments kompensiert.

4. Leitung nach einem der Ansprüche 1 bis 3, wobei die Leitungs-Lichtleitfaser (F) jedes dieser Segmente (S) eine Länge von weniger als 300 km hat.

5. Leitung nach einem der Ansprüche 1 bis 4, wobei die Segmente (S) außerdem einen optischen Verstärker (4, 9) enthalten, der dem Dispersionskompensierer (5; 7, 8, 10) dieses Segments (S) zugeordnet ist.

6. Leitung nach einem der Ansprüche 1 bis 5, wobei die Leitungs-Lichtleitfaser (F) jedes dieser Segmente (S) einen Kern und eine Hülle aufweist, wobei der Kern einen Mittelteil, dessen Brechungsindex größer als jener der Hülle ist, einen Umfangsteil, dessen Brechungsindex größer als jener des Mittelteils ist, und einen Einschlusskranz, dessen Brechungsindex kleiner als jener der Hülle ist, aufweist.

7. Verfahren für die Übertragung mit Lichtleitfasern, wobei das Verfahren einen Schritt des Herstellens einer Lichtleitfaser-Übertragungsleitung (L) umfasst, die Lichtsignale von einem Eingang (10) bis zu einem Ausgang (11) der Übertragungsleitung (L) führen kann, wobei die Übertragungsleitung (L) eine Folge von Segmenten (S), die in Reihe geschaltet sind und wovon sich jedes von einem Eingang (2) zu einem Ausgang (3) des Segments (S) erstreckt und eine Leitungs-Lichtleitfaser (F) zum Führen einer Trägerwelle enthält, wobei die Leitungs-Lichtleitfaser (F) aus einer Einzelmoden-Lichtleitfaser mit einer effektiven Modenoberfläche für die Trägerwelle gebildet und mit Verlusten behaftet ist und wobei jedes dieser Segmente (S) einen optischen Verstärker (4) aufweist, der am Ausgang (3) des Segments (S) angeordnet ist und wenigstens einen Hauptteil der Verluste der Leitungs-Lichtleitfaser (F) des Segments (S) kompensiert,

wobei das Verfahren außerdem die folgenden Schritte umfasst:

- Verbinden eines Senders (T) mit dem Eingang (10) der Übertragungsleitung, wobei der Sender (T) Informationen empfangen kann und in Reaktion darauf Lichtsignale, die diese Informationen tragen, liefert,
- Verbinden eines Empfängers (R) mit dem Ausgang (11) der Übertragungsleitung (L), wobei der Empfänger (R) die Lichtsignale empfangen kann und in Reaktion darauf die von diesen Lichtsignalen getragenen Informationen liefern kann,
- Empfangen von zu übertragenden Informationen,
- Liefern der zu übertragenden Informationen zu dem Sender, damit der Empfänger in Reaktion darauf diese Informationen liefert,

wobei das Verfahren **dadurch gekennzeichnet ist, dass** sich die Leitungs-Lichtleitfaser (F) zum Führen der Trägerwelle jedes dieser Segmente (S) von dem Eingang (2) dieses Segments (S) im Wesentlichen bis zu dem Ausgang (3) dieses Segments (S) erstreckt und aus einer Einzelmoden-Lichtleitfaser gebildet ist, die eine chromatische Dispersion für die Trägerwelle und ein spektrales Gefälle der Dispersion besitzt und eine effektive Modenoberfläche, die für eine Trägerwelle mit einer Wellenlänge von 1550 nm größer als 150 $\mu m^2$ ist, besitzt,

durch einen Schritt des Einfügens eines Dispersionskompensierers (5; 7, 8, 10) in jedes dieser Segmente (S) dieser Übertragungsleitung (L), wobei der Dispersionskompensierer (5; 7, 8, 10) dem optischen Verstärker (4) des Segments (S) zugeordnet und zwischen der Leitungs-Lichtleitfaser (F) des Segments (S) und dem Ausgang (3) des Segments (S) in Reihe geschaltet ist und wenigstens einen Hauptteil der chromatischen Dispersion und/oder des spektralen Gefälles der Dispersion der Leitungs-Lichtleitfaser (F) des Segments (S) kompensiert, und

**dadurch**, dass wenigstens der Schritt des Ausgebens der zu übertragenden Informationen an den Sender (T) ausschließlich nach dem Schritt des Einsetzens des Dispersionskompensierers (5; 7, 8, 10) in jedes dieser Segmente (S) erfolgt.

8. Verfahren für die Übertragung mit Lichtleitfasern nach Anspruch 7, wobei die Leitungs-Lichtleitfaser (F) eine chromatische Dispersion besitzt, die für die Trägerwelle mit einer Wellenlänge im Bereich von 1530 bis 1600 nm größer als 6 ps/(nm · km) ist, wobei der Dispersionskompensierer (5; 7, 8, 10) wenigstens 90 % der chromatischen Dispersion kompensiert.

9. Verfahren für die Übertragung mit Lichtleitfasern nach einem der Ansprüche 7 bis 8, wobei die Leitungs-Lichtleitfaser (F) ein spektrales Gefälle der chromatischen Dispersion besitzt, das in der Umgebung einer Wellenlänge von 1550 nm größer als 0,05 ps/(nm² · km) ist, wobei der Dispersionskompensierer (5; 7, 8, 10) wenigstens 90 % des spektralen Gefälles der chromatischen Dispersion kompensiert.

10. Verfahren für die Übertragung mit Lichtleitfasern nach einem der Ansprüche 7 bis 9, wobei die Leitungs-Lichtleitfaser (F) jedes der Segmente (S) eine Länge von weniger als 300 km besitzt.

11. Verfahren für die Übertragung mit Lichtleitfasern nach einem der Ansprüche 7 bis 10, wobei die Leitungs-Lichtleitfaser (F) jedes dieser Segmente (S) einen Kern und eine Hülle aufweist, wobei der Kern einen Mittelteil, dessen Brechungsindex größer als jener der Hülle ist, einen Umfangsteil, dessen Brechungsindex größer als jener des Mittelteils ist, und einen Einschlusskranz, dessen Brechungsindex kleiner als jener der Hülle ist, umfasst.

# FIG_1

# FIG_2

# FIG_3

# FIG_4